Europäisches Patentamt

European Patent Office

Office européen des brevets

(19)

(11) Numéro de publication: **0 341 169**
A2

## (12) DEMANDE DE BREVET EUROPEEN

(21) Numéro de dépôt: 89420165.6

(22) Date de dépôt: 02.05.89

(51) Int. Cl.⁴: **G 01 N 27/46**

(30) Priorité: 03.05.88 FR 8806431

(43) Date de publication de la demande:
08.11.89 Bulletin 89/45

(84) Etats contractants désignés:
AT BE CH DE ES GB GR IT LI LU NL SE

(71) Demandeur: PECHINEY
23, rue Balzac
F-75008 Paris (FR)

(72) Inventeur: **Bommier, Christophe**
**75 rue Michel-Ange**
**F-75016 Paris (FR)**

**Gimenez, Philippe**
**7 Chemin du Chapitre**
**F-38100 Grenoble (FR)**

**Kucza, Jean-Claude**
**La Gatelière**
**F-38960 St. Etienne de Crossey (FR)**

**Rabiet, Jacques**
**Lotissement Bellevue**
**F-38570 Goncelin (FR)**

(74) Mandataire: **Vanlaer, Marcel et al**
**PECHINEY 28, rue de Bonnel**
**F-69433 Lyon Cédex 3 (FR)**

(54) Procédé d'identification d'alliages d'Al par une voie électrochimique.

(57) L'invention concerne un procédé d'identification de la (ou des) face(s) externe(s) en alliage d'Al d'un matériau homogène ou composite par voie électrochimique.

Cette méthode consiste à former, in situ, sur les produits à identifier une couche anodique par électrolyse dans des conditions déterminées et à suivre l'évolution de la tension U aux bornes de l'électrolyseur en fonction du temps t au cours d'un essai intentio-statique. Comme indiqué dans la figure 2 ci-après la forme et la position relative de courbes U = f(t), ainsi obtenues, permet d'identifier les différents alliages testés.

Par rapport aux méthodes de marquage antérieures, la méthode présente les avantages suivants:
- méthode non destructive, utilisable in situ, sur des produits pouvant être de grandes dimensions (bobines, plaques, tôles etc...).
- identification quasi-instantanée
- grande fiabilité
- simplicité d'emploi et économie d'utilisation.

FIG.2

## Description

### PROCEDE D'IDENTIFICATION D'ALLIAGES D'AL PAR UNE VOIE ELECTROCHIMIQUE

L'invention concerne un procédé d'identification de la (ou des) face(s) externe(s) en alliage d'Al d'un matériau homogène ou composite par voie électrochimique.

Le problème qui se trouve à la base de l'invention est la difficulté pratique, tant chez le fabricant que chez le client, d'identifier tout au long de la gamme de fabrication, et de façon rapide et non destructive la nature d'un matériau homogène à base d'Al ou d'un composite plaqué à base d'Al, tel qu'on peut le rencontrer par exemple dans la fabrication des échangeurs de chaleur brasés.

Cette identification s'applique à toutes les familles d'alliages d'Al; dans le cas de composites plaqués ceux-ci sont souvent constitués selon les désignations de l'Aluminium Association d'une âme en 3003 plaquée sur une face d'un autre alliage tel que le 4045, le 4104 ou le 4343 ou même d'un alliage 3003 plaqué sur une face par un alliage 4343 et par un alliage 7072 sur l'autre face.

La méthode selon l'invention consiste à former, in situ, sur le produit à identifier, une couche anodique par électrolyse dans des conditions déterminées et à suivre l'évolution de la tension U aux bornes de l'électrolyseur en fonction du temps t au cours d'un essai intentiostatique. Comme indiqué ci-après, la forme et la position relative des courbes U = f(t), ainsi obtenues, permet d'identifier les différents alliages testés.

.De façon plus précise, l'anodisation conduite de la façon suivante:
- intensité: constante comprise entre 0,1 mA/cm2 et 100 mA/cm2 de surface anodique
- température constante à ± 2°C près entre 0 et 100°C
- électrolyte: peut être choisi parmi les solutions de tartrate, citrate, borate, tétraborate, ou adipate d'ammonium, sodium ou potassium ou d'un mélange de ces sels dont la concentration est comprise entre 1 g/l et la saturation. -la cathode étant constituée par un alliage 3003 ou 1199.
- la durée de l'essai est généralement inférieure à 7 minutes.

L'invention sera mieux comprise à l'aide des exemples suivants, illustrés par les figures 1 à 4.

La figure 1 représente le schéma électrique du dispositif utilisé.

La figure 2 représente les courbes moyennes U = f(t) pour divers alliages dans les conditions de l'exemple I (i = 2,5 mA/cm2).

La figure 3 représente les courbes moyennes U = f(t) pour les alliages 40C0 avec une densité de courant de 7,5 mA/cm2.

La figure 4 représente les courbes moyennes U = f(t) pour i = 2,5 mA/cm2 dans le cas des alliages plaqués.

La figure 5 représente schématiquement une vue en coupe axiale de l'électrolyseur utilisé.

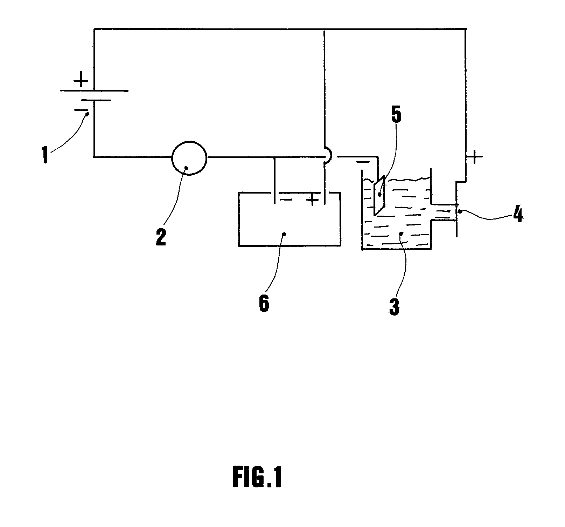

Le montage électrique (fig. 1) comporte un générateur à courant continu par exemple 120 v - 20 mA monté en série avec un intensiostat 2 et la cellule d'électrolyse 3 dont l'anode est l'échantillon à analyser 4 et la cathode 5 est en 3003. Aux bornes de l'électrolyseur est monté en dérivation un enregistreur 6 U = f(t).

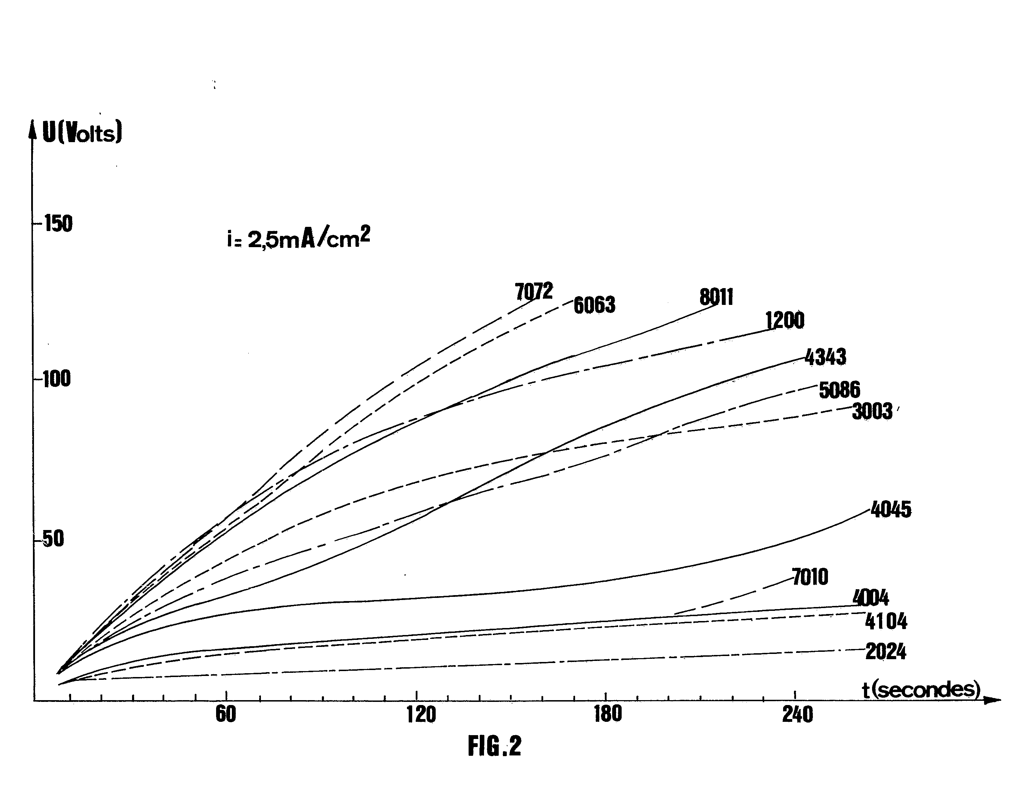

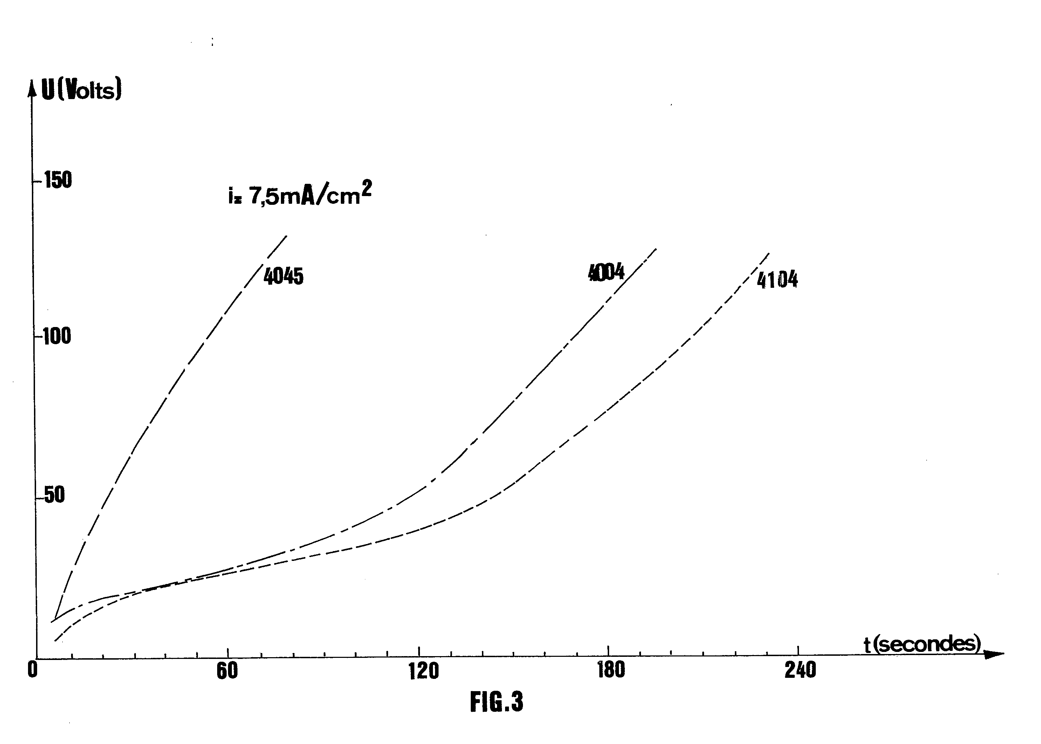

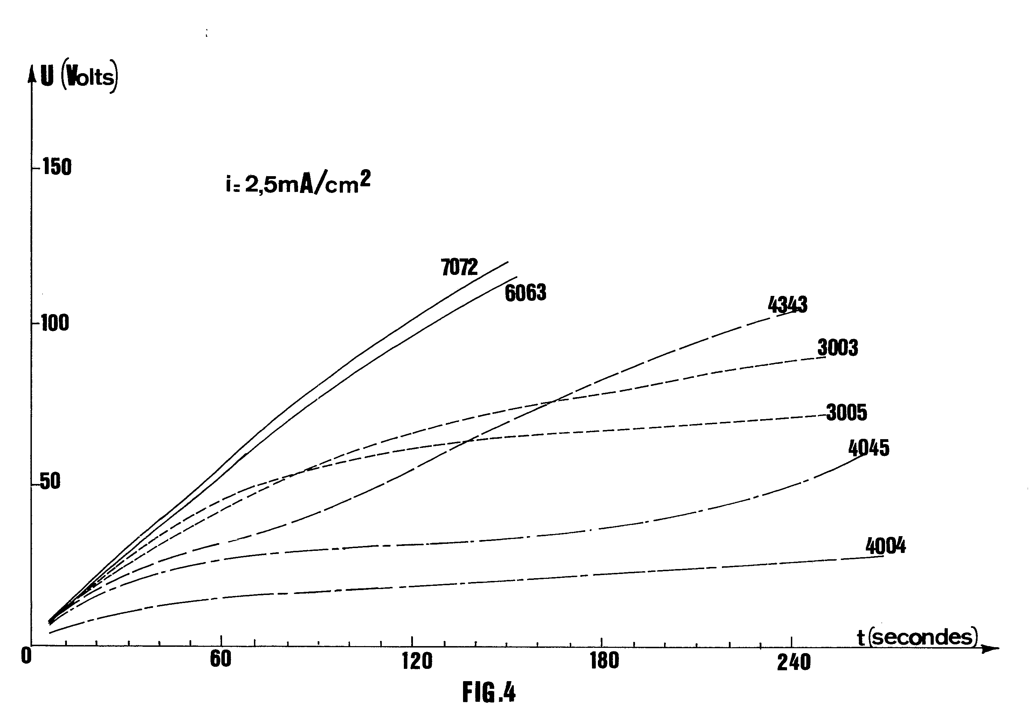

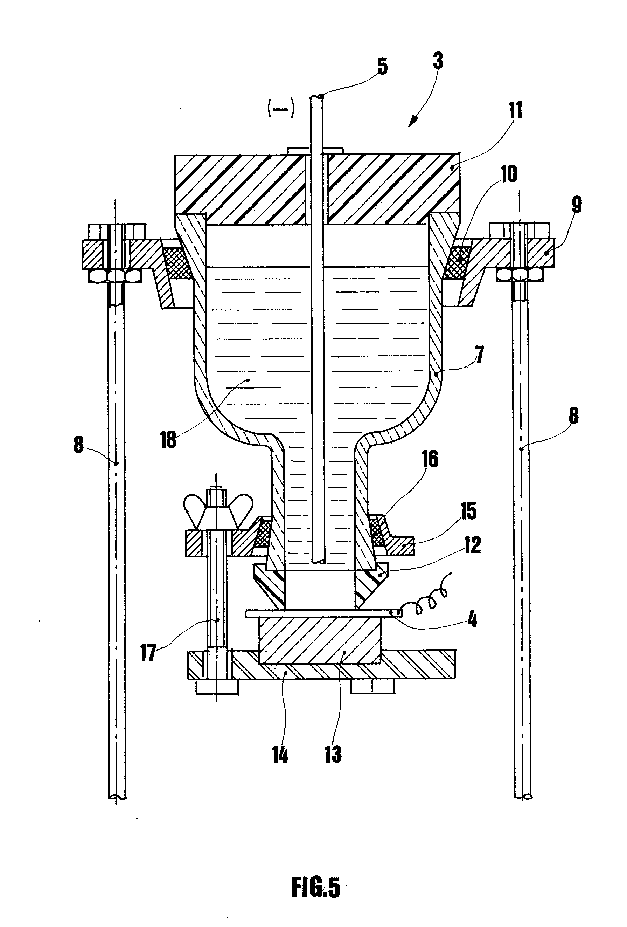

Les courbes des figures 2 et 4 ont été établies avec la cellule représentée à la figure 5 dans une solution à 30 g/l de tartrate d'ammonium, maintenues à 20°C + 2°C et avec une densité de courant anodique égal à 2,5 mA/cm2.
Les courbes de la figure 3 ont été établie dans les mêmes conditions mais avec une densité de courant de 7,5 mA/cm2.

On peut constater que les courbes U = f(t) du 4004 et du 4014, pratiquement confondues avec i = 2,5 mA/cm2 (fig. 2) se différencient nettement lorsque i = 7,5 mA/cm2 (fig. 3).

On peut constater sur la figure 2 que la meilleure sensibilité est obtenue pour des temps d'essais allant de 80 à 120 sec., l'optimum étant aux environs de 100 secondes, pour une densité de courant égale à 2,5 mA/cm2.
Lorsque la discrimination entre alliages est insuffisante à une certaine densité de courant, on recommence l'essai avec une densité de courant supérieure.

L'électrolyseur utilisé est représenté à la figure 5. Il comporte une cuve d'électrolyse 7 en pyrex supportée par un piètement 8, une bride - support 9 et un joint 10. Elle est formée à sa partie supérieure par un cuvercle 1 en plexiglass lequel est traversé par la cathode 5.
L'échantillon 4, ici un feuillard, est fixé à la partie inférieure de l'électrolyseur 3 par un joint en Téflon 12 et un système de serrage 13,14,15,16 à vis 17.
L'électrolyseur est rempli par l'électrolyte 18.

L'électrolyseur utilisé peut être de nature différente de celui représenté à la figure 5; en particulier, il peut être du type "tampon" où l'électrolyte est supporté par un milieu poreux (feutre, verre fritté, etc...) avec application manuelle directe sur l'échantillon à analyser.

Le procédé selon l'invention présente par rapport aux méthodes de marquage de l'art antérieur les avantages suivants:
- méthode non destructive, utilisable in situ sur des produits pouvant être de grandes dimensions (bobines, plaques, tôles, etc...)
- identification quasi instantanée
- grande fiabilité
- simplicité d'emploi et économie d'utilisation.

### Revendications

1 - Méthode de détermination de la nature d'alliages d'Al par la forme et la position relative des courbes U = f(t) en régime intensiostatique, U étant la tension aux bornes d'un électrolyseur et the temps, dont l'échantillon analysé constitue l'anode, la cathode étant en 3003 ou en 1199.

2 - Méthode selon la revendication 1 caractérisé en ce que la densité de courant anodique (d) est comprise entre 0,1 et 100 mA/cm2.

3 - Méthode selon la revendication 1 ou 2 caractérisé en ce que l'électrolyte est une solution contenant de 1 g/litre à la saturation à base de tartrate, citrate, borate, tétraborate ou adipate d'ammonium, de sodium ou de potassium ou un mélange de ces sels.

4 - Méthode selon l'une des revendications 1 à 3 caractérisé en ce que la température est comprise entre 0 et 100°C, et est tenue constante à ± 2°C près.

5 - Méthode selon l'une des revendications 1 à 4 caractérisé en ce que la durée de l'essai est comprise entre 80 et 120 secondes pour d = 2,5 mA/cm2.

6. Méthode selon l'une des revendications 1 à 4 caractérisé en ce que l'on procède à une première discrimination à faible densité de courant anodique puis à une discrimination définitive à forte densité de courant anodique.

**FIG.1**

FIG.2

FIG.3

FIG.4

FIG.5